(19) Europäisches Patentamt
European Patent Office
Office européen des brevets

(11) **EP 0 962 914 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(51) Int Cl.:
*G10L 15/26* *(2006.01)* *G10L 13/04* *(2006.01)*

(21) Anmeldenummer: **99109410.3**

(22) Anmeldetag: **11.05.1999**

(54) **Verfahren und Vorrichtung zum Ermitteln eines Zuverlässigkeitsmasses für die Spracherkennung**

Method and apparatus for determining a confidence measure for speech recognition

Procédé et dispositif de reconnaissance de la parole automatique utilisant une mesure de fiabilité

(84) Benannte Vertragsstaaten:
**CH DE FR GB IT LI NL**

(30) Priorität: **30.05.1998 DE 19824450**

(43) Veröffentlichungstag der Anmeldung:
**08.12.1999 Patentblatt 1999/49**

(73) Patentinhaber: **GBS Holding GmbH**
**81827 München (DE)**

(72) Erfinder: **Zhu, Ming, Dr.**
**90762 Fürth (DE)**

(74) Vertreter: **Pröll, Jürgen**
**Maryniok & Eichstädt**
**Anwaltssozietät**
**Kuhbergstrasse 23**
**96317 Kronach (DE)**

(56) Entgegenhaltungen:
**EP-A- 0 834 862**

• **KLATT D H: "Word verification in a speech understanding system" MAY 1975, USA, Seiten 1-39, XP000889735 BBN-3082**

**Beschreibung**

Die Erfindung betrifft ein Verfahren zur Verarbeitung von Sprachsignalen, bei welchem die Sprachsignale einem Spracherkennungssystem zugeführt werden, welches an seinem Ausgang Textsignale in Form von digitalen Daten zur Verfügung stellt, die einer Folge von erkannten Wörtern entsprechen. Weiterhin betrifft die Erfindung eine Vorrichtung zur Verarbeitung von Sprachsignalen.

Spracherkennungssysteme sind bereits bekannt und werden zur Umwandlung von Sprachsignalen in digitale Daten verwendet, die Textsignalen entsprechen. Diese Textsignale können dann in alphanumerischer Form auf einem Bildschirm dargestellt und mittels eines Druckers ausgedruckt werden. Derartige Spracherkennungssysteme werden beispielsweise von den Firmen IBM und Dragon Systems Inc. unter den Bezeichnungen Via Voice bzw. Naturally Speaking am Markt angeboten und sind von jedermann käuflich erwerbbar.

Die gegenwärtig verfügbaren Spracherkennungssysteme arbeiten mit statistischen Mustererkennungsverfahren, die zwischen dem eingehenden Sprachsignal und vorberechneten Sprachmodellen Ähnlichkeiten ermitteln. Auf der Basis solcher Ähnlichkeitsmessungen, die auf einem Vergleich von Spektraleigenschaften und ihrer zeitlichen Abfolge beruhen, wird das eingehende Sprachsignal auf eine Symbolfrequenz klassifiziert, die die wahrscheinlichste Abfolge der entsprechenden Sprachmodelle mit maximalen Wahrscheinlichkeiten repräsentiert.

Solche Systeme können bereits akzeptable Erkennungsgenauigkeit liefern, die deutlich über 90% liegt, wenn die Umgebung ruhig ist und der Sprecher deutlich spricht.

Technisch bedingt haben solche Systeme aber folgendes Problem: Erkennt das System die Spracheingabe falsch, so gibt das System Ergebnisse aus, die für den Benutzer oft weder logisch noch phonetisch nachvollziehbar sind. Dies wirkt sich besonders negativ aus, wenn entweder die allgemeine Fehlerrate aus irgendwelchen Gründen hoch ist oder wenn Wörter, die für den Inhalt entscheidende Bedeutung haben, falsch erkannt werden.

Aus DE 32 16 800 C2 ist eine Worteingabeanordnung für sprachgesteuerte Geräte bekannt. Diese Anordnung weist eine Kodiereinrichtung für jedes von einem Sprecher gesprochenes Wort auf. Dieses Wort wird gemäß einem ersten vorgegebenen Algorithmus zur Ableitung eines kodierten Wortes verwendet. Im weiteren ist eine Speichereinrichtung zum Speichern von Referenzen entsprechend jeweils der Kordierung eines der gesprochenen Worte gemäß des ersten Algorithmus und mindestens eines vom Sprecher gesprochenes Wortes in kodierter Form vorhanden. Im weiteren ist ein Steuerschaltkreis mit einem Klassifizierschaltkreis zum Zuordnen eines Ähnlichkeitsranges zu jeder gespeicherten Reverenz und einem Anzeigesteuerschaltkreis zur Steuerung der Anzeige der gespeicherten Reverenz, die den ersten Ähnlichkeitsrangbestitz, in Abhängigkeit von einem zweiten Algorithmus, vorgesehen. Dieser Steuerschaltkreis weist eine Anzeigerichtung zum Anzeigen eines der gespeicherten Worte und eine Steuereinrichtung für die Änderung der Referenzen auf. Im weiteren weist der Steuerschaltkreis eine Detektoreinrichtung zum Erfassen einer Wiederholung eines vorhergehenden gesprochenen Wortes, bei zwei aufeinanderfolgenden Worten, in Abhängigkeit von einem dritten vorgegebenen Algorithmus auf. Der Steuerkreis ist derart ausgebildet, daß im Fall der Wiederholung dasjenige Wort angezeigt wird, das in der Reihenfolge der Ähnlichkeit dem unmittelbar zuvor angezeigten Wort folgt. Schließlich ist eine Anordnung zum Modifizieren der in der Speichereinrichtung enthaltenen Referenzen vorgesehen, welche die Referenz, die dem zuletzt angezeigtem Wort zugeordnet ist, das die Information entsprechende Kodierung des wiederholten Wortes ersetzt, wobei die Substitution durch Betätigung der Steuereinrichtung aktiviert wird.

Nachteilig hierbei ist aber, daß nur einzelne Worte und nicht Wortfolgen oder Fließtext analysiert werden können.

Aus Klatt DH, "Word Verification in a Speech Understanding System" Mai 1975, USA. Seiten 1 bis 39. XP000889735, BBN 3082 ist ein Spracherkennungssystem beschrieben. Das Spracherkennungssystem basiert auf einer Iterativen Analyse bei einer Wortfolge und gibt eine aus einem Sprachsignal ermittelte Wortfolge aus.

Aus Romano Rodriguez J., "Word verification in continuous speech by means of demisyllable synthesis", Proceedings of EUSIPCO 1990, ist ein Verfahren zum Ermitteln des Korrektheitsgrades von Ergebnissen eines Spracherkenners bekannt.

Aus DE 40 02 336 C2 ist ein Bezugsmustererneuerungsverfahren bekannt. Bei diesem Verfahren wird einem Eingangsmuster eine Aussprache eines Wortes eingegeben. Anschließend wird das Ausgangsmuster mit dem Bezugsmuster verglichen, welches in einem Wörterbuchspeicher gespeichert ist. Hierdurch wird zumindest ein ersten Kandidaten mit dem höchsten Ähnlichkeitsgrad und ein zweiten Kandidat mit einem zweithöchsten Ähnlichkeitsgrad erzeugt. Hieraus wird ein Verhältnis des höchsten Ähnlichkeitsgrades zum zweithöchsten Ähnlichkeitdgrad errechnet. Anschließend wird bestimmt, ob das Verhältnis gleich oder kleiner als ein vorbestimmter Schwellenwert ist. Aus dem Eingangsmuster wird ein erneutes Bezugsmuster berechnet, welches entsprechend als Bezugsmuster einzusetzen ist, wenn bestimmt wird, daß das Verhältnis des höchsten Ähnlichkeitsgrades zum zweithöchsten Ähnlichkeitdgrad weder gleich noch kleiner als der vorgegeben Schwellwert ist. Letztlich wird das erneute Bezugsmuster anstelle des ursprünglichen Bezugsmusters im digitalen Wörterbuch registriert.

Nachteilig hierbei ist wiederum, daß nur einzelne Worte und nicht Wortfolgen oder Fließtext analysiert werden können.

Ausgehend von diesem Stand der Technik liegt der Erfindung die Aufgabe zugrunde, einen Weg aufzuzeigen, wie bekannte Spracherkennungssysteme verbessert werden können.

Diese Aufgabe wird durch ein Verfahren mit den im Anspruch 1 angegebenen Merkmalen und durch eine Vorrichtung mit den im Anspruch 5 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, daß durch die ermittelte Folge von Abstandswerten Informationen zur Verfügung stehen, die phonetisch irrelevante Ausgaben eines Spracherkennungssystems kennzeichnen. Darauf aufbauend lassen sich Spracherkennungssysteme realisieren, die ständig ihre Ergebnisse selbst kontrollieren und darüber hinaus weitere Bearbeitungsvorgänge starten können, die zu einer verbesserten Spracherkennung führen.

Beispielsweise kann das beanspruchte Verfahren im Zusammenhang mit Diktiersystemen verwendet werden. Dabei können die Ausgabetexte der Spracherkennung kontrolliert und bei Bedarf korrigiert werden. Problembereiche können in dem auf einem Bildschirm dargestellten Text markiert, d. h. visuell gekennzeichnet werden.

Ein weiteres Anwendungsgebiet der Erfindung sind Sprachsteuerungssysteme. Bei diesen können erkannte Kommandos nochmals überprüft und gegebenenfalls korrigiert oder abgelehnt werden, bevor eine Aktion ausgeführt oder ein Dialog gesteuert wird.

Ferner ist die Erfindung bei sogenannten Client-Server-Systemen für Diktierdienste verwendbar. Dort werden für die von der Sprachengine transkribierten Dokumente automatisch Schätzwerte für die Fehlerraten ermittelt. Dadurch lassen sich verschiedene Nachbearbeitungsstrategien entwickeln, die menschliche Resourcen für die Fehlerkorrektur wirtschaftlich und produktivitätsfördernd einsetzen.

Weitere vorteilhafte Eigenschaften der Erfindung ergeben sich aus der Erläuterung eines Ausführungsbeispiels anhand der Figuren. Es zeigt:

-    Figur 1 ein Blockschaltbild zur Veranschaulichung des grundsätzlichen Aufbaus einer zur Durchführung des beanspruchten Verfahrens geeigneten Vorrichtung;

-    Figur 2 ein Blockschaltbild zur Veranschaulichung eines ersten Ausführungsbeispiels für eine Nachverarbeitungseinheit und einer möglichen Folge von Abstandswerten; und

-    Figur 3 ein Blockschaltbild zur Veranschaulichung eines zweiten Ausführungsbeispiels für eine Nachverarbeitungseinheit.

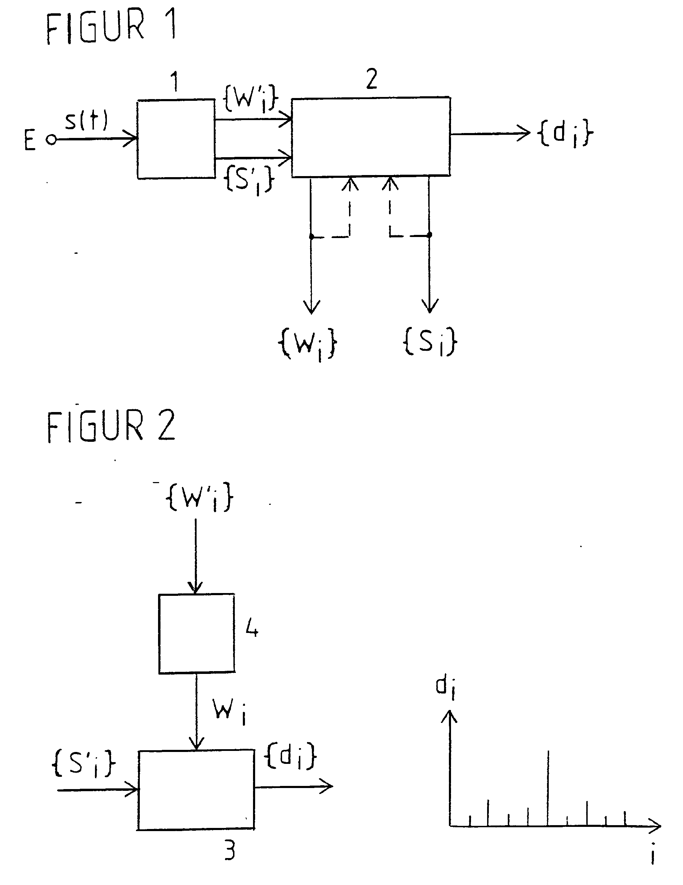

Die Figur 1 zeigt ein Blockschaltbild zur Veranschaulichung des grundsätzlichen Aufbaus einer zur Durchführung des beanspruchten Verfahrens geeigneten Vorrichtung. Dem Eingang E dieser Vorrichtung werden Sprachsignale s (t) zugeführt. Diese gelangen an ein Spracherkennungssystem 1, welches zur Umsetzung der Sprachsignale s (t) in Textsignale vorgesehen ist, die in Form von digitalen Daten am Ausgang des Spracherkennungssystems 1 zur Verfügung gestellt werden. Diese digitalen Daten entsprechen einer Folge von erkannten Wörtern $\{W'_i\}$, die dem Vokabular des Spracherkennungssystems 1 entnommen sind. Weiterhin wird am Ausgang des Spracherkennungssystems 1 eine weitere Folge digitaler Daten $\{S'_i\}$ zur Verfügung gestellt, die einer Folge von Sprachsegmenten der erkannten Wörter entsprechen.

Die genannten Folgen $\{W'_i\}$ und $\{S'_i\}$ werden einer Nachverarbeitungseinheit 2 zugeführt, die zur Ermittlung einer Folge von Abstandswerten $\{d_i\}$ vorgesehen ist. Die ermittelten Abstandswerte geben Auskunft über die Korrektheit der vom Spracherkennungssystem 1 zur Verfügung gestellten Textsignale.

Weiterhin können am Ausgang der Nachverarbeitungseinheit 2 auch Folgen von erkannten Wörtern entsprechende digitale Daten $\{W_i\}$ und eine weitere Folge digitaler Daten $\{S_i\}$ zur Verfügung gestellt werden, die entweder mit den Folgen $\{W'_i\}$ und $\{S'_i\}$ identisch sind oder in der Nachverarbeitungseinheit 2 korrigierte Folgen sind. Diese Korrekturmöglichkeit ist in der Figur 1 durch die gestrichelten Linien angedeutet, aus denen ersichtlich ist, daß die ermittelten Folgen im Rahmen des Nachverarbeitungsvorganges dem Schaltungsblock 2 wiederholt zugeführt werden können, um im Sinne einer Korrektur der Folgen nach Alternativen für fehlerhafte Wörter zu suchen. Dies geschieht - wie unten noch erläutert wird - unter Verwendung eines Assoziationsspeichers, in welchem für jedes Sprachsegment ein zugehöriges Vokabular vorhanden ist, wobei dort nach Entsprechungen gesucht wird.

Die Figur 2 zeigt ein Blockschaltbild zur Veranschaulichung eines ersten Ausführungsbeispiels für eine Nachverarbeitung sowie eine mögliche Folge von Abstandswerten $d_i$.

An einem Eingang der in Figur 2 gezeigten Vorrichtung liegt die Folge digitaler Daten $\{W'_i\}$ an. Diese wird einem Assoziationsspeicher 4 zugeführt, aus welchem auf einer Wortbasis ein zutreffendes Wort in Form von digitalen Daten $W_i$ ausgelesen wird. Weiterhin wird der in Figur 2 gezeigten Vorrichtung die zugehörige Folge weiterer digitaler Daten $\{S'_i\}$ zugeführt, die dem durch das Spracherkennungssystem segmentierten Sprachsignal entspricht. Diese Signale werden einem speziellen Erkenner 3 zugeführt, der auf einer Wortbasis Abstandswerte ermittelt. Dieser Erkenner hat ein dynamisches Vokabular $\{W_i\}$. Im gezeigten Fall ist der Erkenner 3 eine Einwort-Erkennungsvorrichtung, der für das

Sprachsegment S'$_i$ ein aktives Vokabular W'$_i$ hat. Am Ausgang der Einwort-Erkennungsvorrichtung 3 steht eine Sequenz von Abstandswerten {d$_i$} zur Verfügung, die die Ähnlichkeit zwischen der phonetischen Beschreibung von {W$_i$} und dem segmentierten Sprachsignal {S'$_i$} beschreibt. Dies geschieht durch die folgende Gleichung:

$$d_i = D(TTS(W_i), S'_i) \qquad\qquad i = 0,1,2, ..., N,$$

wobei N die Anzahl der betrachteten Wörter, TTS (w) die phonetische Beschreibung (Text-To-Speech) des Wortes w und D (x,y) eine Form von Viterbi-Abstandsmessung zwischen x und y ist.

Im Falle einer Verwechslung des i-ten Wortes weicht die Ausgabe W'$_i$ von der richtigen phonetischen Beschreibung ab, so daß der Abstand d$_i$ zwischen TTS (W$_i$) und dem Signalabschnitt S'$_i$ auffallend groß ist. Ein Beispiel für eine Folge von Abstandswerten {d$_i$} ist aus der rechten Darstellung von Figur 2 ersichtlich.

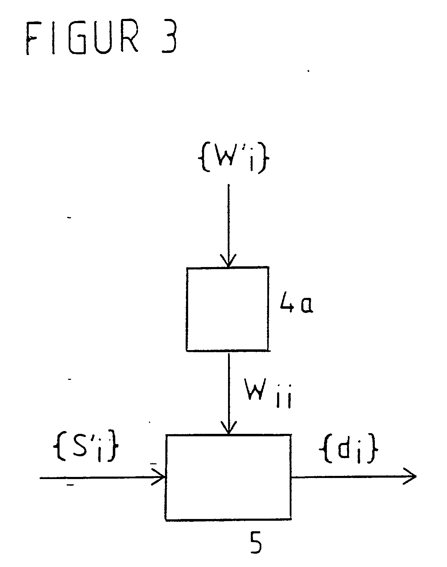

Eine Abstandsfolge mit häufig oder dauernd auftretenden größeren Abstandswerten deutet auf komplexe Fehlermuster hin, was in der Praxis eine Kombination von Verwechslungen, Einfügungen und Auslassungen sein könnte. In solchen Situationen müssen mehrere aufeinanderfolgende Wörter in die Betrachtungen einbezogen werden, wie es in der Figur 3 gezeigt ist. Die Figur 3 zeigt ein Blockschaltbild zur Veranschaulichung eines zweiten Ausführungsbeispiels für eine Nachverarbeitungseinheit. Diese Nachverarbeitung geschieht im Sinne einer lokalen Erkennung mit mehreren beteiligten Wörtern bzw. Wortfolgen sowie einem erweiterten Vokabular, das eine Zusammenstellung von Wörtern umfaßt, die mit den aktuellen Ausgaben assoziieren. Diese Assoziation ist ein dynamischer Vorgang, der sich ständig an den Inhalt der Ausgabe anpaßt. Die Implementierung eines derartigen assoziierenden Mechanismus läßt sich auf verschiedene Weise gestalten. Im einfachsten Fall wird ein Assoziationsspeicher 4a verwendet, dessen Einträge empirisch festgelegt sind.

Diesem Assoziationsspeicher 4a wird die im Spracherkennungssystem 1 erzeugte Folge von erkannten Wörtern {W'$_i$} zugeführt. In diesem Assoziationsspeicher 4a ist eine Vielzahl von Wortgruppen abgelegt, aus denen in Ansprache auf die Zuführung eines Abschnittes der Folge {W'$_i$}, der mehrere Wörter bzw. eine Wortfolge umfaßt, eine Wortgruppe W$_{ii}$ ausgewählt und einem Viterbi-Decoder 5 zugeführt wird. Dort erfolgt, wie es bereits oben im Zusammenhang mit der Figur 2 beschrieben wurde, unter gleichzeitiger Verwendung zugehöriger Abschnitte aus der Folge {S'$_i$} die Ermittlung einer Folge von Abstandswerten {d$_i$}, die jedoch im Unterschied zum obigen Ausführungsbeispiel nicht wortbezogen, sondern wortgruppenbezogen vorgenommen wird. Am Ausgang des Viterbi-Decoders 5 können wie beim obigen Ausführungsbeispiel neben der Folge von Abstandswerten {d$_i$} auch Folgen {W$_i$} und {S$_i$} zur Verfügung gestellt werden, die auf die gleiche Weise weiterverarbeitet werden können wie die oben beschriebenen gleichnamigen Folgen.

Die Ausgangssignale des Spracherkennungssystems 1 oder der Nachverarbeitungseinheit 2 werden vorzugsweise in alphanumerischer Form als Textsignal auf einem nicht gezeichneten Bildschirm dargestellt. Um dem Benutzer fehlerhafte oder kritische Wörter oder Wortgruppen optisch zu signalisieren, können diese durch Auswertung der ermittelten Abstandswerte farbig oder blinkend dargestellt oder farbig hinterlegt werden. Diese fehlerhaften oder kritischen Wörter können vom Benutzer überprüft und unter Verwendung einer alphanumerischen Eingabetastatur ausgebessert werden.

Weiterhin wird auf dem Bildschirm auch ein aus den ermittelten Abstandswerten berechneter Schätzwert für den Korrektheitsgrad der am Ausgang des Spracherkennungssystems zur Verfügung gestellten Textsignale dargestellt.

**Patentansprüche**

1. Verfahren zur Verarbeitung von Sprachsignalen, bei welchem die Sprachsignale s(t) einem Spracherkennungssystem (1) zugeführt werden, welches an seinem Ausgang Textsignale in Form von digitalen Daten zur Verfügung stellt, die einer Folge von erkannten Wörtern W'$_i$ entsprechen, die dem Vokabular des Spracherkennungssystems (1) entnommen sind, und eine weitere Folge digitaler Daten S'$_i$ zur Verfügung stellt, die einer Folge von Sprachsegmenten der erkannten Wörter entsprechen, die dem durch das Spracherkennungssystem (1) segmentierten Sprachsignal entsprechen,

**dadurch gekennzeichnet, dass**

die Folge von erkannten Wörtern entsprechenden digitalen Daten W'$_i$ und die weitere Folge digitaler Daten S'$_i$ einer Nachverarbeitung unterworfen werden, bei welcher eine Folge von Abstandswerten d$_i$ ermittelt wird, die Auskunft über die Korrektheit der vom Spracherkennungssystem zur Verfügung gestellten Textsignale gibt, wobei einer Nachbearbeitungseinheit (2) die Folge von erkannten Wörtern W'$_i$ und die weitere Folge digitaler Daten S'$_i$ zugeführt wird, wobei die Folge digitaler Daten W'$_i$ einem Assoziationsspeicher (4) zugeführt wird, aus welchem auf einer Wortbasis ein zutreffendes Wort in Form von digitalen Daten W$_i$ ausgelesen wird, und die digitalen Daten W$_i$ und die weitere Folge digitaler Daten S'$_i$ einem speziellen Erkenner (3) zugeführt werden, der auf einer Wortbasis Abstandswerte ermittelt, die am Ausgang des Erkenners (3) als die Folge von Abstandswerten $d_i$ zur Verfügung stehen und die die Ähnlichkeit zwischen der phonetischen Beschreibung von $W_i$ und dem segmentierten Sprachsignal $S'_i$ beschreibt und dass die Folge von Abstandswerten $d_i$ nach der Gleichung $d_i = D(TTS (W_i), S'_i)$ ermittelt wird, wobei H $S'_i$ die einem Sprachsegment entsprechenden Daten, TTS $(W_i)$ die phonetische Beschreibung eines Wortes mittels Sprachsynthese und D eine Viterbi-Abstandsmessung sind, dass die der Folge von erkannten Wörtern entsprechenden digitalen Daten im Rahmen der Nachverarbeitung unter Verwendung des Assoziationsspeichers (4) korrigiert werden, wenn die ermittelten Abstandswerte das Vorliegen fehlerhafter Textsignale signalisieren und die der Folge von erkannten Wörtern entsprechenden Daten in Form von alphanumerischen Signalen auf einem Bildschirm dargestellt werden und die ermittelten Abstandswerte zur Markierung fehlerhafter Wörter innerhalb der alphanumerischen Signale dienen.

2. Verfahren nach Anspruch 1,
   **dadurch gekennzeichnet, dass**
   im Rahmen der Nachverarbeitung eine Einworterkennung erfolgt.

3. Verfahren nach Anspruch 1 oder 2,
   **dadurch gekennzeichnet, dass**
   im Rahmen der Nachverarbeitung eine Erkennung von Wortfolgen erfolgt.

4. Verfahren nach einem der Ansprüche 1 bis 3,
   **dadurch gekennzeichnet, dass**
   aus den ermittelten Abstandswerten ein Schätzwert für den Korrektheitsgrad der am Ausgang des Spracherkennungssystems zur Verfügung gestellten Textsignale ermittelt wird.

5. Vorrichtung zur Verarbeitung eines Sprachsignals, mit

   - einem Spracherkennungssystem (1), dem eingangsseitig das Sprachsignal (s(t)) zugeführt wird und das ausgangsseitig eine Folge von erkannten Wörtern entsprechenden digitalen Daten $\{W'_i\}$ und eine Folge weiterer digitaler Daten $\{S'_i\}$ zur Verfügung stellt, die einer Folge von Sprachsegmenten der erkannten Wörter entsprechen, und
   - einer an den Ausgang des Spracherkennungssystems (1) angeschlossenen Nachverarbeitungseinheit (2), welcher eingangsseitig die Folge von erkannten Wörtern $W'_i$, entsprechenden digitalen Daten und die Folge weiterer digitaler Daten $S'_i$, zugeführt wird, und welche ausgangsseitig eine Folge von Abstandswerten $d_i$ zur Verfügung stellt, die Auskunft über die Korrektheit der vom Spracherkennungssystem zur Verfügung gestellten Textsignale gibt, wobei die Nachverarbeitungseinheit (2) einen Assoziationsspeicher (4) aufweist, der so ausgestaltet ist, dass er aus einer ihm zugeführten Folge digitaler Daten $W'_i$, auf einer Wortbasis ein zutreffendes Wort in Form von digitalen Daten $W_i$ ausliest, und einen speziellen Erkenner (3) aufweist, der so ausgestaltet ist, dass ihm die digitalen Daten $W_i$ und die weitere Folge digitaler Daten $S'_i$ zuführbar sind und er am Ausgang des Erkenners (3) die Folge von Abstandswerten $d_i$ zur Verfügung stellt, die die Ähnlichkeit zwischen der mittels Sprachsynthese synthetisierten phonetischen Beschreibung von $W_i$ und dem segmentierten Sprachsignal $S'_i$ beschreibt und die Nachverarbeitungseinheit (2) einen zur Ermittlung von Abstandswerten vorgesehenen Viterbi-Decoder (3,5) aufweist, wobei eine Korrektur unter Verwendung des Assoziationsspeichers (4) erfolgt und dass die Nachverarbeitungseinheit (2) einen Bildschirm zur Darstellung der erkannten Wörter in Form eines alphanumerischen Textes aufweist, wobei in diesem Text als fehlerhaft erkannte Wörter markiert sind und/oder der Bildschirm zur Darstellung von Signalen vorgesehen ist, die einem Schätzwert für den Korrektheitsgrad der am Ausgang des Spracherkennungssystems zur Verfügung gestellten Textsignale entsprechen.

**Claims**

1. Method of processing speech signals, in which the speech signals s(t) are supplied to a speech recognition system (1), which makes available at its output text signals in the form of digital data which correspond with a sequence of recognised words $W'_i$ derived from the vocabulary of the speech recognition system (1), and makes available a further sequence of digital data $S'_i$ corresponding with a sequence of speech segments of the recognised words, which correspond with the speech signal segmented by the speech recognition system (1), **characterised in that** the sequence of digital data $W'_i$ corresponding with recognised words and the further sequence of digital data $S'_i$ are subjected to a further processing in which a sequence of spacing values $d_i$ is determined, which gives information about the correctness of the text signals made available by the speech recognition system, wherein the sequence of recognised words W'$_i$ and the further sequence of digital data S'$_i$ are fed to a further processing unit (2), wherein the sequence of digital data W'$_i$ is fed to an association memory (4) from which an applicable word in the form of digital data W$_i$ is read out on a word basis, and the digital data W$_i$ and the further sequence of digital data S'$_i$ are fed to a special recognition means (3) which ascertains, on a word basis, spacing values which are made available at the output of the recognition means (3) as the sequence of spacing values d$_i$ and which describe the similarity between the phonetic description of W$_i$ and the segmented speed signal S'$_i$ and that the sequence of spacing values d$_i$ is determined in accordance with the equation d$_i$ = D(TTS (W$_i$), S'$_i$), wherein S'$_i$ is the data corresponding with a speech segment, TTS is the phonetic description of a word by means of speech synthesis and D is a Viterbi spacing measurement, that the digital data corresponding with the sequence of recognised words are corrected within the scope of the further processing with use of the association memory (4) when the ascertained spacing values signal the presence of erroneous text signals and the data corresponding with the sequence of recognised words are represented on a screen in the form of alphanumeric signals and the ascertained spacing values serve for marking erroneous words within the alphanumeric signals.

2. Method according to claim 1, **characterised in that** a single word recognition is carried out within the scope of the further processing.

3. Method according to claim 1 or 2, **characterised in that** a recognition of word sequences is carried out within the scope of the further processing.

4. Method according to any one of claims 1 to 3, **characterised in that** an estimated value for the degree of correction of the text signals made available at the output of the speech recognition system is determined from the ascertained spacing values.

5. Device for processing a speech signal, with

- a speech recognition system (1) to which the speech signal (s(t)) is fed at the input side and a sequence of digital data {W'$_i$} corresponding with recognised words and a sequence of further digital data {S'$_i$} are made available at the output side, which correspond with a sequence of speech segments of the recognised words, and
- a further processing unit (2) connected with the output of the speech recognition system (1), to which unit the sequence of digital data corresponding with recognised words W'$_i$ and the sequence of further digital data S'$_i$ are fed at the input side and which unit makes available at the output side a sequence of spacing values d$_i$ giving information about the correctness of the text signals made available by the speech recognition system, wherein the further processing unit (2) comprises an association memory (4) which is so designed that it reads an applicable word in the form of digital data W$_i$ out of a sequence, which is fed to it, of digital data W'$_i$ on a word basis, and comprises a special recognition means (3) which is so designed that the digital data W$_i$ and the further sequence of digital data S'$_i$ can be fed thereto and it makes available at the output of the recognition means (3) the sequence of spacing values d$_i$ which describe the similarity between the phonetic description, which is synthesised by means of speech synthesis, of W$_i$ and the segmented speech signal S'$_i$ and the further processing unit (2) comprises a Viterbi decoder (3, 5) provided for ascertaining spacing values, wherein a correction is carried out with use of the association memory (4) and that the further processing unit (2) comprises an image screen for representation of the recognised words in the form of an alphanumeric text, wherein recognised words are marked as erroneous in this text and/or the image screen is provided for representation of signals which correspond with an estimated value for the degree of correctness of the text signals made available at the output of the speech recognition system.

**Revendications**

1. Procédé de transformation de signaux vocaux avec lequel les signaux vocaux s(t) sont amenés vers un système de reconnaissance vocale (1), qui fournit à sa sortie des signaux textuels sous forme de données numériques, correspondant à une suite de mots W'$_i$ - - reconnus empruntés au vocabulaire du système de reconnaissance-vocale (1), et-fournit-une nouvelle suite de données numériques S'i, correspondant à une suite de segments vocaux des mots reconnus qui correspondent au signal vocal segmenté par le système de reconnaissance vocale (1),
**caractérisé en ce que**
la suite de données numériques W'$_i$ correspondant à des mots reconnus et la nouvelle suite de données numériques S'$_i$ sont soumises à une post-transformation durant laquelle une suite de valeurs d'écartement d$_i$ est déterminée, suite qui donne des renseignements sur l'exactitude des signaux textuels fournis par le système de reconnaissance vocale, en quoi la suite de mots reconnus W'$_i$ et la nouvelle suite de données numériques S'$_i$ sont amenées vers une unité de post-traitement (2), en quoi la suite de données numériques W'$_i$ est amenée vers une mémoire associative (4), à partir de laquelle, sur une base de mot, un mot pertinent est lu sous forme de données numériques W$_i$, et les données numériques W$_i$ et la nouvelle suite de données numériques S'$_i$ sont amenées vers un appareil de reconnaissance spécial (3), lequel détermine, sur une base de mot, des valeurs d'écartement, lesquelles sont disponibles à la sortie de l'appareil de reconnaissance (3) comme suite de valeurs d'écartement d$_i$, qui décrit la ressemblance entre la description phonétique de W$_i$ et le signal vocal segmenté S'$_i$, et que la suite de valeurs d'écartement d$_i$ est déterminée selon l'équation d$_i$ = D(TTS (W$_i$), S'$_i$), en quoi S'$_i$ sont les données correspondant à un segment vocal, TTS (W$_i$) est la description phonétique d'un mot au moyen d'une synthèse vocale et D est une mesure d'écartement de Viterbi, que les données numériques correspondant à la suite de mots inconnus sont corrigées dans le cadre de la post-transformation avec recours à la mémoire associative (4), lorsque les valeurs d'écartement déterminées signalent la présence de signaux textuels défectueux, lorsque les données correspondant à la suite de mots reconnus sont représentées sur un écran sous forme de signaux alphanumériques et lorsque les valeurs d'écartement déterminées servent au marquage de mots défectueux au niveau des signaux alphanumériques.

2. Procédé selon la revendication 1,
**caractérisé en ce que**
la reconnaissance d'un mot est réalisée dans le cadre de la post-transformation.

3. Procédé selon les revendications 1 ou 2,
**caractérisé en ce que**
la reconnaissance de suites de mots est réalisée dans le cadre de la post-transformation.

4. Procédé selon une des revendications 1 à 3,
**caractérisé en ce qu'**
une valeur estimée est déterminée à partir des valeurs d'écartement déterminées pour le degré d'exactitude des signaux textuels fournis à la sortie du système de reconnaissance vocale.

5. Procédé de transformation d'un signal vocal, avec

- un système de reconnaissance vocale (1), vers lequel est amené côté entrée le signal vocal (s(t)) et qui fournit côté sortie une suite de données numériques {W'$_i$} correspondant à des mots reconnus ainsi qu'une suite de nouvelles données numériques {S'$_i$}, qui correspondent à une suite de segments vocaux des mots reconnus, et
- une unité de post-transformation (2) raccordée à la sortie du système de reconnaissance vocale (1), vers laquelle sont amenées côté entrée la suite de données numériques correspondant aux mots reconnus W'$_i$ et la suite de nouvelles données numériques S'$_i$, et qui fournit côté sortie une suite de valeurs d'écartement d$_i$, suite qui donne des renseignements sur l'exactitude des signaux textuels fournis par le système de reconnaissance vocale, en quoi l'unité de post-transformation (2) présente une mémoire associative (4) conçue de manière à lire à partir d'une suite de données numériques W'$_i$ qui lui est amenée, sur une base de mot, un mot pertinent sous forme de données numériques W$_i$, et présente un appareil de reconnaissance spécial (3) conçu de manière à pouvoir recevoir les données numériques W$_i$ et la nouvelle suite de données numériques S'$_i$ et à fournir à la sortie de l'appareil de reconnaissance (3) la suite de valeurs d'écartement d$_i$, qui décrit la ressemblance entre la description phonétique de W$_i$ synthétisée par synthèse vocale et le signal vocal segmenté S'$_i$, et en quoi l'unité de post-transformation (2) présente un décodeur Viterbi (3,5) prévu pour la détermination de valeurs d'écartement, en quoi une correction est réalisée avec recours à la mémoire associative (4) et l'unité de post-transformation (2) présente un écran pour la représentation des mots reconnus sous forme d'un texte alphanumérique, en quoi les mots reconnus comme étant défectueux sont marqués dans ce texte et/ou l'écran est prévu pour la représentation de signaux correspondant à une valeur estimée pour le degré d'exactitude des signaux textuels fournis à la sortie du système de reconnaissance vocale.

# FIGUR 1

$E$ ○ —— $s(t)$ —→ [ 1 ] —— $\{W'_i\}$ —→ [ 2 ] —→ $\{d_i\}$
$\{S'_i\}$

$\{W_i\}$   $\{S_i\}$

# FIGUR 2

$\{W'_i\}$
↓
[ 4 ]
↓ $W_i$
$\{S'_i\}$ —→ [ 3 ] —→ $\{d_i\}$
3

$d_i$ ↑

→ $i$

# FIGUR 3

$\{W'_i\}$

4a

$W_{ii}$

$\{S'_i\}$     5     $\{d_i\}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3216800 C2

- DE 4002336 C2

**In der Beschreibung aufgeführte Nicht-Patentliteratur**

- **Klatt DH.** *Word Verification in a Speech Understanding System,* Mai 1975, 1-39

- **Romano Rodriguez J.** Word verification in continuous speech by means of demisyllable synthesis. *Proceedings of EUSIPCO,* 1990